# EUROPÄISCHE PATENTSCHRIFT

(11) **EP 1 964 286 B1**
(45) Veröffentlichungstag und Bekanntmachung des Hinweises auf die Patenterteilung: **08.02.2012**
(21) Anmeldenummer: 06828613.7
(22) Anmeldetag: 05.12.2006
(51) Int. Cl.: H04B 7/10, H04B 3/00, H04B 7/08

(54) **ANORDNUNG EINER FUNKÜBERTRAGUNGSSTRECKE**
ARRANGEMENT FOR A RADIO LINK
DISPOSITIF POUR PARCOURS DE RADIOTRANSMISSION

(30) Priorität: 20.12.2005 DE 102005061219
(43) Veröffentlichungstag der Anmeldung: 03.09.2008
(73) Patentinhaber: Fachhochschule Aachen, 52066 Aachen (DE)
(72) Erfinder: HEUERMANN, Holger, 52223 Stolberg-Breinig (DE)
(74) Vertreter: Ostermann, Thomas
(86) Internationale Anmeldenummer: PCT/DE2006/002162
(87) Internationale Veröffentlichungsnummer: WO 2007/076757

(56) Entgegenhaltungen:
- EP-A- 0 656 697
- DE-A1- 19 838 544
- US-A- 5 262 788

## Beschreibung

Die Erfindung betrifft eine Anordnung einer Funkübertragungsstrecke nach dem Oberbegriff des Patentanspruchs 1.

### Stand der Technik

Funkübertragungsstrecken in der Hochfrequenz- und Mikrowellentechnik haben in der modernen Kommunikationstechnik eine herausragende Bedeutung.In den 80er Jahren waren Radio- und Fernsehen-Broadcasting die einzigen Funkübertragungsstrecken für den Konsumermarkt. Nunmehr bieten Standards wie GSM, UMTS, DVB, WLAN, Bluetooth, GPS, Galileo, Dect, Satellitenfernsehen und viele weitere eine riesige Anwendungsvielfalt im Konsumerbereich. Der Trend zu drahtlosen Systemen wird sich mit Sicherheit in der Zukunft vorsetzen.

All diese Funkübertragungssysteme haben gemein, dass diese Systeme bei Sendern und Empfängern auf klassischen Techniken der heterodynen oder zunehmend homodynen Frequenzumsetzung beruhen.
Die Hochfrequenzsignale sind fast ausnahmslos digital in der Amplitude und/oder Phase oder der Frequenz moduliert. Die modulierten Signale werden zunehmend in Rechnern aufbereitet und im Anschluss über DA-Wandler in ein analoges Signal umgewandelt. Dieses wird mittels rauscharmen Synthesegeneratoren (Synthesizern) und Einseitenbandversetzern (IQ-Modulatoren) in den höheren MHz- oder den GHz-Bereich umgesetzt.In den Empfangszweigen werden nach rauscharmer Vorverstärkung und schmalbandiger Bandpassfilterung die Hochfrequenzsignale (HF-Signale) mittels eines Einseitenbandempfängers und des notwendigen rauscharmen Lokaloszillatorsignales eines Synthesizer so heruntergemischt, dass sie mittels eines AD-Wandlers rechnergerecht aufbereitet werden können.

Bekanntlich benötigen bidirektionale Sende-Empfangsschaltungen für den heterodynen Betrieb zwei Synthesizer und für den homodynen Betrieb nur einen Synthesizer. Deshalb haben sich homodyne Systeme trotz des Mehraufwandes für die IQ-Modulatoren auch durchgesetzt. Da die Information der Hochfrequenzübertragungsstrecke im Abstand von einigen kHz bis zu einigen MHz vom Lokaloszillatorsignal entfernt ist, muss Letzterer ein sehr geringes Phasenrauschen aufweisen. Die Höhe des Phasenrauschens eines Synthesizers im Abstand des Übertragungssignals beschränkt in modernen Systemen die Empfindlichkeit und somit die Reichweite des Funksystems.

Freiraumübertragungsstrecken bieten mit den vertikalen und horizontalen bzw. den rechtszirkularen und den linkszirkularen homogenen ebenen Wellen jeweils zwei mögliche Übertragungsmoden. Fast alle Übertragungsstandards arbeiten nur mit einem dieser vier möglichen Moden. Werden zwei Moden eingesetzt, so arbeitet man mit zwei entkoppelten Übertragungsstrecken wie beim Satellitenfernsehen (kurz Sat-TV). Das heißt, dass man zwei Funksysteme parallel betreibt und somit nur die halbe Bandbreite für die gleiche Informationsmenge benötigt. Es gibt keine Korrelation zwischen den Signalen mit den beiden unterschiedlichen Moden.

Alle bekannten Modulationen kann man auf die drei Verfahren Amplitudenmodulation (AM), Phasenmodulation (PM) und Frequenzmodulation (FM) zurückführen. In der modernen Übertragungstechnik werden zunehmend diskrete Amplituden- und Phasenmodulationen kombiniert (z.B. QAM). Diese werden den hybriden Modulationsformen zugeordnet.

### Kritik am Stand der Technik

Die heutigen Funkübertragungssysteme sind um Größenordnungen komplexer als beispielsweise das Detektorradio für amplitudenmodulierte Signale aus der Gründerzeit, da aufwendige und möglichst rauscharme Synthesizer benötigt werden. Aus diesem Grund sind die Elektronikkosten trotz modernster Hochintegration immer noch recht groß. Während das klassische Detektorradio für eine unidirektionale Funkübertragung nur einen Oszillator im Sender benötigte, kommt kein modernes System ohne Oszillatoren (i.d.R. sogar Synthesizer) im Empfänger aus.

In Halbleitern integrierte rauscharme Synthesizer benötigen mindestens eine sehr große Spule (und somit sehr viel Halbleiterfläche) und haben einen relativ großen Strombedarf. Übertragungssysteme, die lediglich aufgrund der präzisen Einhaltung eines Frequenzbereiches Synthesizer benötigen, kommen folglich mit Synthesizern aus, die viel weniger Chipfläche benötigen und somit billiger sind als auch längere Batteriezeiten erlauben.

Die heutige Notwendigkeit des Einsatzes von Synthesizern verhindert den Aufbau von Übertragungsstrecken im dreistelligen GHz-Bereich mit Bandbreiten, die denen von optischen Übertragungsstrecken entsprechen.

Die Masse der Funkübertragungssysteme beruht auf der Übertragung mittels nur einem Freiraummode und nutzt somit nur die Hälfte der vorhandenen Übertragungskapazität aus.

Kein Übertragungssystem macht es sich zu Nutze den Freiheitsgrad der korrelierten Signale der beiden Übertragungsmoden des Freiraumes zu verwenden.

Hybride Modulationsformen, die AM, PM und FM gleichzeitig nutzen, wurden bisher noch nicht eingeführt, obwohl diese offensichtlich eine verbesserte Bandbreitennutzung zulassen.

Da die bekannten Übertragungssysteme auf der Modulation von einem Hochfrequenzsignal mit bekannter Frequenz beruhen, unterliegen diese Verfahren dem Dopplereffekt.

Aus der DE 198 38 544 A1 ist ein Messverfahren zur Prüfung von Eigenschaften von Nachrichtenübertragungsstrecken mit einem Messsender, einem Messempfänger und einem unterschiedliche Frequenzen des Messsenders steuernden und das Ausgangssignal des Messempfängers auswertenden Rechner bekannt.

Aus der US 5 262 788 A ist eine Anordnung einer Funkübertragungsstrecke unter Nutzung von mindestens zwei Freiraummoden bekannt, nämlich einer horizontalen und einer vertikalen oder rechts- und linkszirkularer Moden. Eine Multiplikation der verschieden polarisierten Moden auf der Empfangsseite ist nicht vorgesehen.

Aufgabe der vorliegenden Erfindung ist es daher, eine Anordnung einer Funkübertragungsstrecke unter Nutzung von mindestens zwei Freiraummoden derart weiterzubilden, dass der Bauelementeaufwand weiter reduziert wird.

Zur Lösung dieser Aufgabe weist die Erfindung die Merkmale des Patentanspruchs 1 auf.

### Erzielbare Vorteile

Gegenstand der Erfindung ist der Anordnung einer Übertragungsstrecke für zwei Freiraummoden unter Ausnutzung der Korrelation der Signale, kurz der Dual-Mode-Funk.

Mittels dieses Dual-Mode-Funks wird immer die volle Übertragungskapazität des Funkkanals genutzt. Werden sogar alle vier Moden der Freiraumübertragungsstrecke genutzt, so lässt sich die Übertragungskapazität nochmals verdoppeln.

Ein unidirektionales Dual-Mode-Funkübertragungssystem benötigt minimal nur einen Oszillator für den Sender und keinen Oszillator im Empfänger. Das Phasenrauschen des Oszillators hat keinen Einfluss auf die Empfindlichkeit und somit die Reichweite des Übertragungssystems. Folglich wird nur dann ein Synthesizer für den Sender benötigt, wenn man sicherstellen muss, dass ein Funkkanal eingehalten wird. In Summe reduziert sich der Bauelementeaufwand für den Sender und dem Empfänger. Abhängig von der gewählten Modulation reduziert sich der notwendige Bauelementeaufwand bis auf einen HF-Detektor oder Mischer.

Die immense Reduktion des Hardware-Aufwandes schlägt sich somit auch in der Preisgestaltung positiv wieder. Ebenfalls erlaubt der prinzipielle Wegfall eines rauscharmen Synthesizers die Umsetzung von breitbandigsten Funkübertragungen im dreistelligen GHz-Bereich.

Die verbilligte Herstellbarkeit von Hochfrequenzübertragungssysteme bietet neben der Preisreduktion der aktuellen Applikationen auch den Raum für neue Applikationen, die aufgrund der aktuellen Kosten noch unattraktiv sind.

Es sind alle bekannten Modulationsverfahren mit den bekannten Eigenschaften an Bandbreitenbedarf, Bitfehlerraten und ähnliches einsetzbar. Jedoch sind die zugehörigen Modulatoren deutlich vereinfacht. Nach der Erfindung lassen sich mittels eines Multiplizierers (Gilbertmischer, Ringmischer, o.ä.) sehr gute Empfänger für die drei Grundmodulationen AM, PM und FM mit unterschiedlichen Ausgangssignalen herstellen. Deshalb können diese drei Modulationsarten sogar kombiniert werden, was immens die Datenmenge für eine gegebene Bandbreite steigert.

Die Tatsache, dass nur noch die Korrelation zwischen zwei Signalen ausgewertet wird, bedingt, dass der Dopplereffekt keinen Einfluss mehr auf die Signalübertragung hat. Entspringen beide modulierten und korrelierten Sendesignale dem gleichen Oszillator, so hat dessen Phasenrauschen kein Einfluss mehr.

Im Empfänger der Dual-Mode-Funk-Systeme werden die zwei Signale beider Antennen mittels des Multiplizierers bzw. Mischers in den Zwischenfrequenz-Bereich (ZF-Bereich) umgesetzt. Dadurch ist gewährleistet, dass im logarithmischen Maß die doppelte Empfindlichkeit gegenüber einem (Amplituden-) Detektorempfänger gegeben ist.

Da die Empfänger extrem einfach aufgebaut sind, benötigen sie generell sehr wenig Energie für die Stromversorgung. Für aller einfachste Systeme, wie sie zum Beispiel in RFID-Anwendungen genutzt werden, kann man ganz ohne zusätzlich Energieversorgung auskommen. Zum Beispiel können parallel zu einem so genannten FDM-Signal zwei monofrequente Signale gleicher Frequenz zur Stromversorgung über Dual-Mode-Funk dienen. Die beiden Signale werden mittels eines passiven Ringmischers gleichgerichtet und dem System zur Verfügung gestellt.

Aktuell wird daran gearbeitet über eine geschirmte Zweidrahtleitung möglichst große Datenmengen zu übertragen. Wie im Weiteren gezeigt wird, ist dieses mit dem neuen Phasenmodulationsverfahren einfach machbar.

### Weitere Ausgestaltung der Erfindung

Dieser im technischen Aufwand vereinfachte Dual-Mode-Funk wird neue Applikationen, die z.Z. aufgrund des notwendigen technischen Aufwandes nicht erschlossen werden, mit sich bringen.

Eine sehr zukunftweisende Applikation ist die Funkkommunikation zwischen Halbleiterschaltungen, die Funk-Chip-Verbindung. Diese wäre in der Praxis z.B. innerhalb des Personalcomputers für eine Verbindung zwischen den Mikroprozessor und den Speicherbausteinen sehr interessant. Eine derartige Funkverbindung würde eine große Anzahl an Kontakten und Treibern einsparen. Die Datenraten liegen jetzt bereits bei 700MHz pro Datenleitung. Unter Einbeziehung der dritten Harmonischen muss deshalb eine Signalleitung für 2,1GHz ausgelegt werden. In der Praxis müssen deshalb bereits die unterschiedlichen Laufzeiten kompensiert werden. Moderne Übertragungsstandards sind differentiell und beidseitig mit 100Ohm abgeschlossen. Kurzum, eine Dual-Mode-Funkverbindung bei rund 20GHz ließe Datenübertragungsraten zu, die den Anforderungen gerecht werden würden. Die notwendigen Antennen wären so klein,.dass sie sich problemlos (in den Randbereichen) auf dem Halbleiterchip integrieren lassen. Die räumliche Integration der Computer würde einen großen Schritt machen. Der Stromverbrauch würde merklich sinken. Für diesen Anwendungsfall wäre die im Weiteren vorgestellte Phasen-Differenzenmodulation (PDM) von Vorteil.

Eine zweite zukunftsweisende neue Applikation läge in der Sicherheitstechnik für den Straßenverkehr. Hierfür genügt eine sehr preiswerte rein unidirektionale Übertragung mit geringen Datenmengen. Für diesen Anwendungsfall genügt bereits die sehr einfache statische Frequenz-Differenzenmodulation (FDM). Hinter jedem Verkehrschild befindet sich ein solarbetriebener Dual-Mode-Funk-Sender, der kontinuierlich zwei Frequenzen im Abstand df über die zwei Übertragungsmoden,aussendet.
Jedem Verkehrschild ist ein Frequenzabstand df z.B. im Raster von 1kHz zugeordnet. In den Kraftfahrzeugen befindet sich in der Frontend-Schaltung hinter den beiden Empfangsantennen gleich ein Mischer, dessen niederfrequentes Ausgangsfrequenz df über eine einfache Digitalschaltung ausgezählt wird. Somit kann dem Fahrer augenblicklich die aktuelle Geschwindigkeitsinformation mitgeteilt werden. Gerade auf zweispurigen Straßen können somit Schilder erkannt werden, die ansonsten von Lastkraftwagen verdeckt werden.

Als sehr interessante Applikation wird die Breitbandübertragung im dreistelligen GHz-Bereich gesehen. Beim Dual-Mode-Funk werden keine digitalen Komponenten wie Frequenzteiler mehr benötigt. Auch spielt in diesem Frequenzbereich die absolute Frequenzlage keine so gravierende Bedeutung wie im einstelligen GHz-Bereich, so dass die Dual-Mode-Funksysteme sehr einfach und somit umsetzbar ausfallen können. So lassen sich mit der sehr einfachen PDM in einem Frequenzbereich zwischen 100 und 140GHz mittels einer QPSK oder gar einer 8PSK je nach EVM-Anforderungen 80 bis 160GBit und mehr übertragen.

Die Kreuzdipolantenne bietet eine einfache Basis alle vier Freiraummoden auszusenden. Zur einfachen Anschauung soll eine einfache digitale Amplitudenmodulation mit den zwei Zuständen "ein" und "aus" dienen. Bisher stehen unter Ausnutzung von zwei Freiraummoden vier Zustände zur Verfügung. Überlagert man der linearen die zirkulare Polarisation, so erhöht man die Anzahl der Zustände auf acht. Hierbei ergeben sich nunmehr drei mögliche Amplitudenwerte am Empfänger.

### Die Figuren zeigen:

- Figur 1:: ein vereinfachtes Blockschaltbild der Sendeeinheit (links) und der Empfangseinheit (rechts) für eine ASK-Modulation und zugehöriges Empfangssignal,
- Figur 2:: ein vereinfachtes Blockschaltbild der Sendeeinheit (links) und der Empfangseinheit (rechts) für eine BPSK-Modulation und zugehöriges Empfangssignal,
- Figur 3:: ein vereinfachtes Blockschaltbild der Sendeeinheit (links) und der Empfangseinheit (rechts) für eine AM- und BPSK-Modulation,
- Figur 4:: ein Blockschaltbild der Sendeeinheit (links) und der Empfangseinheit (rechts) für eine statische oder klassischen FSK-Modulation und
- Figur 5:: Blockschaltbild der Sendeeinheit (links) und der Empfangseinheit (rechts) für eine statische und klassische FSK-Modulation.

### Beschreibung der Erfindung

Der Dual-Mode-Funk zeichnet sich im Allgemeinen dadurch aus, dass zwei oder vier Freiraummoden genutzt werden und die Unterschiede der parallel ausgestrahlten Signale ausgewertet werden. Statt den Freiraummoden können auch Leitungsmoden wie zum Beispiel Gleich- und Gegentaktmode genutzt werden. Dafür benötigt man zwei Leiter und eine Masse (Dreileitersystem). Der Dual-Mode-Funk lässt alle bekannten Grundmodulationsverfahren wie Amplitudenmodulation (AM), Phasenmodulation (PM) und Frequenzmodulation (FM) zu. Diese werden im Weiteren an Beispielen als einzelne und als kombinierte bzw. hybride Modulation vorgestellt. In der komplexesten Ausbaustufe lassen sich erstmalig sogar alle drei Grundmodulationsarten kombinieren.
Da bei dem Dual-Mode-Funk die Differenz zwischen zwei Signalen ausgewertet wird, werden alle umgesetzten Modulationen in den folgenden Applikationen als Differenzenmodulationen (DM) bezeichnet.

Alle im Weiteren vorgestellten Applikationen wurden auf das Grundkonzept, das auch für einfache Anwendungen genügt, reduziert. In der Praxis werden jedoch aus verschiedenen Gründen Verstärker und (Bandpass-)Filter ergänzt.

### Beschreibung der Amplituden-Differenzenmodulation (ADM)

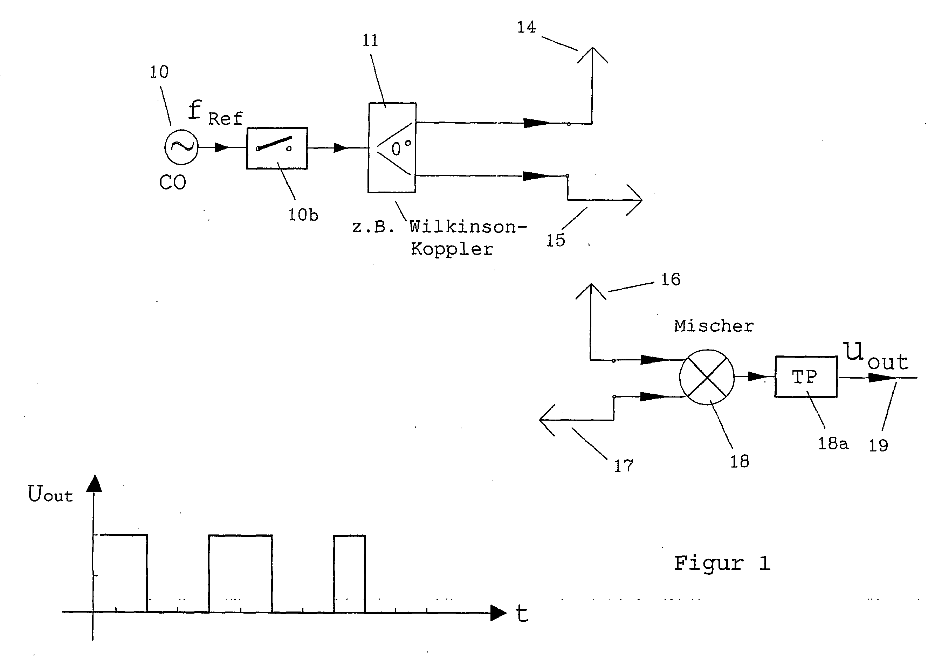

Eine Realisierungsform zum Aufbau einer unidirektionalen Dual-Mode-Funkstrecke für amplitudenmodulierte Signale ist in Fig. 1 dargestellt.
Der monofrequente Hochfrequenzoszillator (CO: continous oscillator) 10 sendet ein Signal mit der Referenzfrequenz f_{ref}. Anschließend wird dieses Signal zum Beispiel durch die digitale Ein- und Ausschaltung in der Amplitude moduliert. Dieses passiert in diesem Fall durch einen einfachen (PIN-Dioden) Schalter.
Das AM-modulierte Signal wird mittels des Signalteilers 11 in zwei Pfade aufgeteilt.
Über die horizontal polarisierte Antenne 15 und die vertikal polarisierte Antenne 14 werden die beiden amplitudenmodulierten Signale abgestrahlt.
Die horizontal polarisierte Antenne 17 und die vertikal polarisierte Antenne 16 empfangen beide Signale und führen diese dem als Multiplizierer ausgeführten Mischer 18 zu. In der Praxis bietet die Gilbertzelle eine mögliche Realisierungsform des Mischers. Der Mischer hat Ausgangssignale im Bereich der doppelten Frequenz und im ZF-Frequenzbereich. Letzterer wird nur durch die Modulationsbandbreite bestimmt. Ein einfachstes Tiefpassfilter 18a lässt nur den unteren Frequenzbereich passieren.
Das Signal Uₒᵤₜ, wie es als Beispiel in Fig. 1 dargestellt ist, kann als digitales Empfangssignal in der anschließenden Elektronik direkt genutzt werden.

Gegenüber einer klassischen AM wird das Sendesignal aufgeteilt und zweimalig abgestrahlt. Somit ist der Bauelementeaufwand bei der ADM größer.
Diese ADM hat den Vorteil gegenüber einer klassischen AM, dass der Multiplizier deutlich empfindlicher als ein Leistungsdetektor ist. Die minimal detektierbaren Signale liegen bei Multiplizierer bei typisch -120dBm, während diese beim Leistungsdetektor lediglich bei typisch -60dBm liegen.

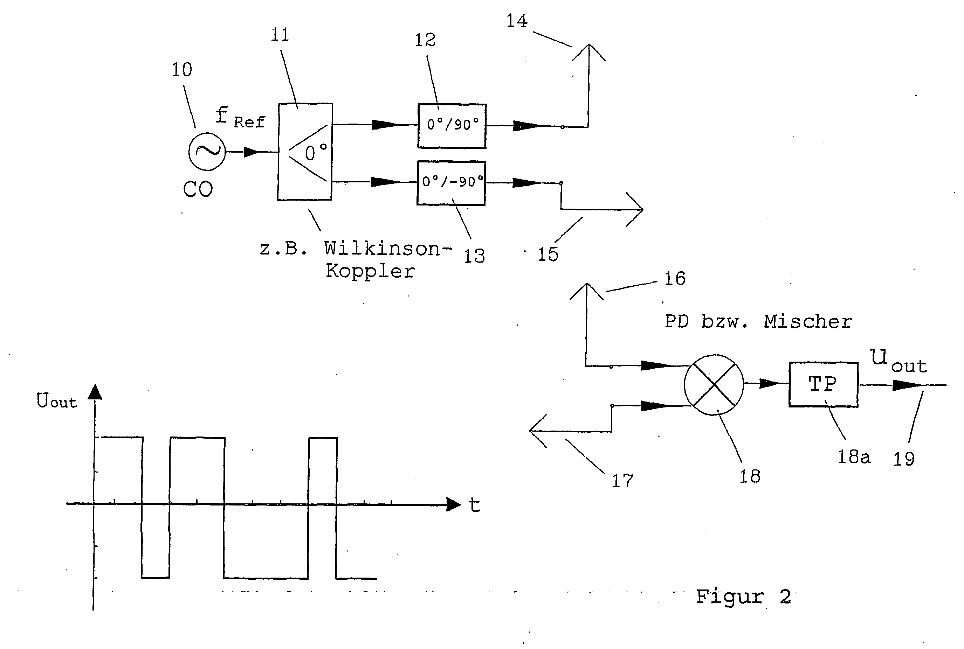

Eine weitere Variante der Amplitudenmodulation mittels Dual-Mode-Funk ist, wenn man anstatt 10b zwei Schalter zwischen den Signalteiler und den Antennen einbringt. Werden diese Schalter differenziell angesteuert (jeweils nur einer ist durchgesteuert), so strahlt der Sender kontinuierlich ein monofrequentes Signal ab, das jedoch zwischen den beiden Freiraumpolarisationen wechselt.
Setzt man nunmehr hinter den beiden Empfangsantennen jeweils ein Leistungsdetektor, so erhält man ein differenzielles Ausgangssignal, das dem von Fig. 2 entspricht. Dieses Signal hat in der niederfrequenten Signalauswertung viele Vorteile.

### Beschreibung der Phasen-Differenzenmodulation (PDM)

Eine Realisierungsform zum Aufbau einer unidirektionalen Dual-Mode-Funkstrecke für phasenmodulierte Signale ist in Fig. 2 dargestellt.
Der monofrequente Hochfrequenzoszillator (CO: continous oscillator) 10 sendet ein Signal mit der Referenzfrequenz f_{ref}. Dieses Signal wird mittels des Signalteilers 11 in zwei Pfade aufgeteilt. Mittels einem 0°/90°- und einem 0°/-90°-Phasenmodulator (12 und 13) werden die Phasenwerte der beiden monofrequenten Hochfrequenzsigriale verändert. Der 0°/90°-Modulator kann z.B. aus zwei Umschaltern, einer Durchverbindung und einer 90° langen Leitung realisiert werden. Der 0°/-90°-Modulator kann hingegen aus zwei Umschaltern, einer Durchverbindung und eines Hochpassfilters mit -90° Phasendrehung hergestellt werden.
Zur Umsetzung einer BPSK-Modulation ist die Ansteuerlogik der beiden Phasenschieber so, dass entweder beide Phasenschieber den Wert von 0° oder den Betragswert von 90° aufweisen.
Über die horizontal polarisierte Antenne 15 und die vertikal polarisierte Antenne 14 werden die beiden phasenmodulierten Signale abgestrahlt.
Die horizontal polarisierte Antenne 17 und die vertikal polarisierte Antenne 16 empfangen beide Signale und führen diese dem als Multiplizierer ausgeführten Mischer 18 zu. Der Mischer hat Ausgangssignale im Bereich der doppelten Frequenz und im ZF-Frequenzbereich. Letzterer wird nur durch die Modulationsbandbreite bestimmt. Ein einfachstes Tiefpassfilter 18a lässt nur den unteren Frequenzbereich passieren.
Das Signal Uₒᵤₜ, wie es als Beispiel in Fig. 2 dargestellt ist, kann als differentielles digitales Empfangssignal direkt in der anschließenden Elektronik genutzt werden.

Obwohl hier eine 0°/180°-Phasenmodulation verwendet wird, brauchen die beiden Kanäle nur mit 90° in der Phasen geschoben werden, was in der Praxis die Bandbreite reduziert.
Interessant ist auch herauszustellen, dass die beiden Signale zwischen Modulatoren und Mischer einem Gleich- und einem Gegentaktmode entsprechen. Für diese beiden Moden gibt eine Menge an Schaltungsentwicklungen, was die Umsetzung der ggf. weiter erforderlichen Hardwarekomponenten vereinfacht.
Aus diesem Grund ist das PDM-BPSK-Verfahren auch für leitungsgebundene Signalübertragung sehr interessant. Die Gleich- und Gegentaktwellenwiderstände der Leitungen sind bestens berechenbar.
Weiterhin ist bei dieser Übertragung auch unmittelbar ersichtlich, dass Fading, dass heißt die Überlagerung von mehrfach reflektierten Signalen mit jeweils unterschiedlichen Laufzeiten, kein Problem ist. Zwei auch phasenverschobene Gleichtaktsignale ergeben erneut ein Gleichtaktsignal. Gleiches gilt für den Gegentakt. Der Empfangsmischer wertet schlussendlich nur aus, ob es sich um eine Gleich- oder ein Gegentaktsignal handelt. Die Signalform (Sinus, Rechteck, Dreieck oder sonstig) spielt gar keine Rolle.

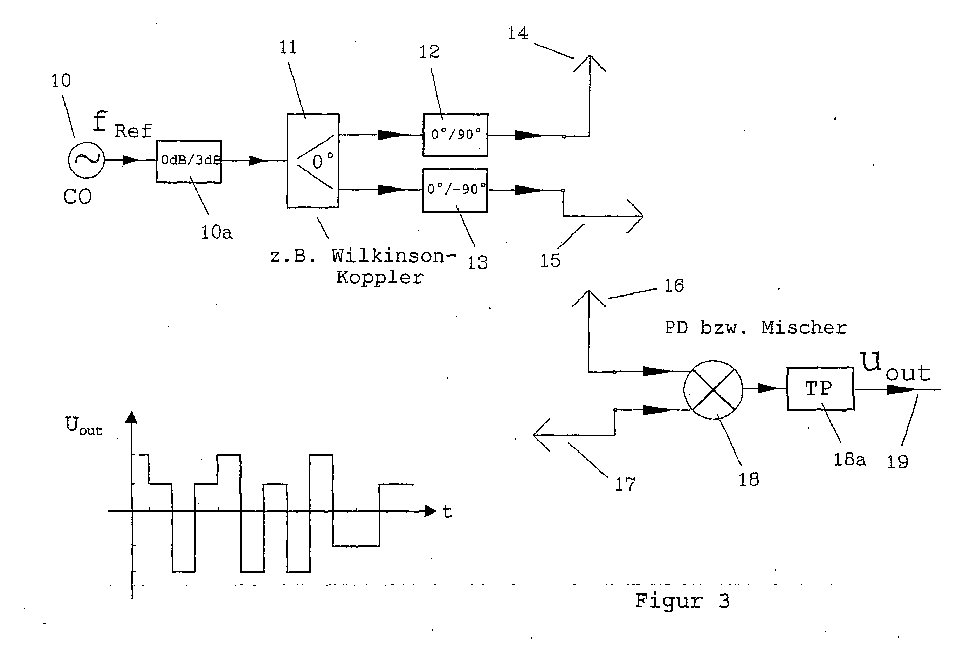

Verwendet man beide Phasenmodulatoren unabhängig von einander, so weisen die Phasendifferenzen die Werte 0°, 90°, -90° und 180° auf. Hierbei handelt es sich um eine QPSK-Modulation. Uₒᵤₜ entspricht nunmehr dem Signal, wie es in Fig. 3 dargestellt ist.
Folglich lässt sich bei gleicher Bandbreite die doppelte Informationsmenge übertragen. Jedoch lassen sich die Ausgangssignale nicht so einfach weiterverarbeiten, wie das Ausgangssignal des BPSK-Systems.

### Beschreibung der Amplituden-Phasen-Differenzenmodulation (APDM)

Eine Realisierungsform zum Aufbau einer unidirektionalen Dual-Mode-Funkstrecke für amplituden- und phasenmodulierte Signale ist in Fig. 3 dargestellt.
Der monofrequente Hochfrequenzoszillator (CO: continous oscillator) 10 sendet ein Signal mit der Referenzfrequenz f_{ref}. Im Anschluss wird dieses Signal zum Beispiel mittels eines schaltbaren Dämpfungsgliedes 10a in der Amplitude moduliert.
Dieses modulierte Signal wird mittels des Signalteilers 11 in zwei Pfade aufgeteilt. Mittels einem 0°/90°- und einem 0°/-90°-Phasenmodulator (12 und 13) werden die Phasenwerte der beiden monofrequenten amplitudenmodulierten Hochfrequenzsignale verändert.
Zur Umsetzung einer BPSK-Modulation ist die Ansteuerlogik der beiden Phasenschieber so, dass entweder beide Phasenschieber den Wert von 0° oder den Betragswert von 90° aufweisen.
Über die horizontal polarisierte Antenne 15 und die vertikal polarisierte Antenne 14 werden die beiden amplituden- und phasenmodulierten Signale abgestrahlt.
Die horizontal polarisierte Antenne 17 und die vertikal polarisierte Antenne 16 empfangen beide Signale.und führen diese dem als Multiplizierer ausgeführten Mischer 18 zu. Der Mischer hat Ausgangssignale im Bereich der doppelten Frequenz und im ZF-Frequenzbereich. Letzterer wird nur durch die Modulationsbandbreite bestimmt. Ein einfachstes Tiefpassfilter 18a lässt nur den unteren Frequenzbereich passieren.
Das Signal Uₒᵤₜ, wie es als Beispiel in Fig. 3 dargestellt ist, enthält vier Zustände und somit zwei Bit.
Diese Signal kann durch einem Rechner oder einer anschliewenden Elektronik ausgewertet und genutzt werden.

Obwohl hier eine 0°/180°-Phasenmodulation verwendet wird, brauchen die beiden Kanäle nur mit 90° in der Phasen geschoben werden, was in der Praxis die Bandbreite reduziert.

### Beschreibung der Frequenz-Differenzenmodulation (FDM)

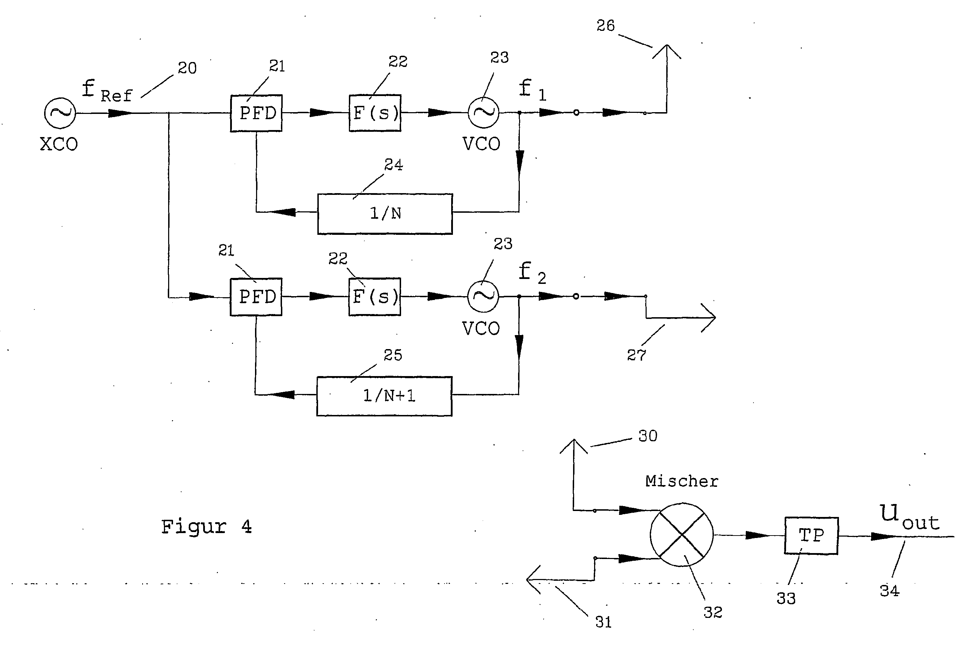

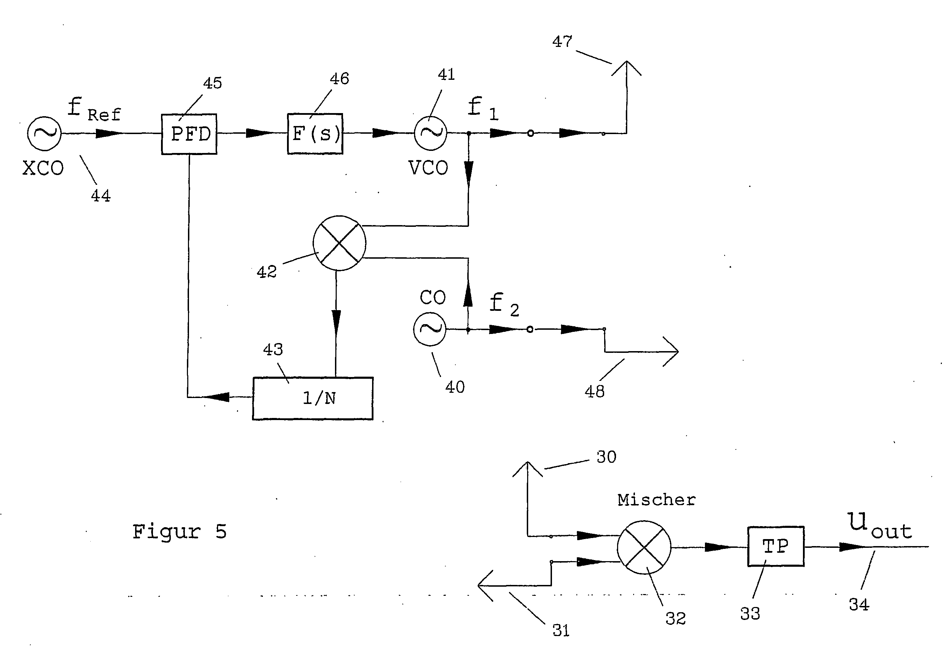

Da dieses Erfindung sich zur Umsetzung einfachster Funk-systeme eignet, soll neben der klassischen Frequenzmodulation (FM) die sogenannte statische Frequenzmodulation eingeführt werden.
Zwei mögliche Blockschaltungen für eine mögliche Umsetzung zeigen die Fig. 4 und Fig. 5.
Bei der statischen wird f1 und f2 niemals über der Frequenz geändert. Folglich kann somit auch nur eine Information (nicht ein Bit) übertragen werden. Dieses sehr einfache Verfahren ist beispielsweise sehr interessant für eine Verkehrszeicheninformation, wie bereits erläutert.

Die Realisierungsform in Fig. 4 ist für Anwendungen im einstelligen GHz-Bereich interessant, da dort integrierte Phasenregelschleifen (PLL's) und sogar integrierte Synthesizer verfügbar sind.
Den Aufbau mit zwei Synthesizern, die am gleichen Quarzoszillator (XCO: christal controlled oscillator) 20 hängen, zeigt eine unidirektionale Dual-Mode-Funkstrecke für frequenzmodulierte Signale.
Die beiden spannungsgesteuerten Oszillatoren (VCO: voltage controlled oscillator) 23 liefern die Ausgangssignale mit den Frequenzen f1 und f2.
Damit diese Frequenzen quarzstabil sind, werden die Hochfrequenzsignale über die Frequenzteiler 24 bzw. 25 und den zugehörigen Teilerverhältnissen (gekennzeichnet durch 1/N bzw. 1/(N+1)) in Signale mit einer Frequenz der Größenordnung von fref umgesetzt.
Die Phasenfrequenzdiskriminatoren (PFD) 21 geben bei Frequenz- bzw. Phasenunterschieden zwischen den geteilten Signalen und der Referenzfrequenz ein Steuersignal aus, das jeweils das Filter 22 durchläuft und den VCO ggf. nachregelt.

Über die horizontal polarisierte Antenne 27 und die vertikal polarisierte Antenne 26 werden die beiden monofrequenten Signale abgestrahlt.
Die horizontal polarisierte Antenne 31 und die vertikal polarisierte Antenne 30 empfangen beide Signale und führen diese dem als Multiplizierer ausgeführten Mischer 32 zu. Der Mischer hat die zwei Ausgangssignale mit den Frequenzen f₁+f₂ und df=f₁-f₂. Die maximale Frequenz von df wird nur durch die Modulationsbandbreite bestimmt. Bei der statischen Frequenzmodulation handelt es sich um den maximalen zugelassenen Wert für df. Ein einfachstes Tiefpassfilter 33 lässt nur die Differenzfrequenzen df passieren. Das Signal Uₒᵤₜ ist nunmehr ein niederfrequentes Sinussignal mit der Frequenz df.
Dieses Wechselsignal kann einfach durch einen elektronischen Frequenzzähler ausgewertet werden.
Setzt man anstatt eines Mischers einen Frequenzdetektor (oder PFD) ein, so hat man direkt ein Ausgangssignal, das dem eines Frequenzzählers mit analogen Ausgangssignal entspricht.

Bei der klassischen Frequenzmodulation wird der Frequenzteiler, der ggf. auch als fraktionaler Teiler mit oder ohne Sigma-Delta-Modulation angesteuert wird, eines einzigen Synthesizers schnell moduliert.
Hier hat man zwar den doppelten Aufwand beim Sender, aber einen deutlich verringerten Aufwand beim Empfänger. Gibt es deutlich mehr Empfänger als Sender in ein System, so bietet der Dual-Mode-Funk die kostengünstigere Lösung.

Ein weiterer Vorteil ist auch, dass nunmehr beide Synthesizer moduliert werden können, und folglich jeder Synthesizer nur den halben Frequenzhub bewerkstelligen muss.

Die zweite Realisierungsform in Fig. 5 ist insbesondere für den zwei- und dreistelligen GHz-Bereich ein sehr interessantes Konzept.
Ein Festoszillator 40 sendet das monofrequente HF-Signal mit der Frequenz f₂ aus.
Der Mischer 42, der Teiler 43 sowie der PFD 45 sorgen dafür, dass der Frequenzabstand des Ausgangssignals des VCO's 41 mit der Absolutfrequenz f₁ zur Frequenz f₂ quarzstabil realisiert wird.
Der Teiler 43 muss lediglich als maximale Frequenz der Abstand df sicher verarbeiten können. Die Teilerwerte von 43 sind in der Praxis deutlich geringer als die Teilerwerte von 24 und 25. Dadurch regelt die PLL viel besser das Phasenrauschen des VCO's 41 aus. Somit wird diese Schaltung bessere Übertragungseigenschaften bieten als die nach Fig. 4.
Der Empfänger ist genauso wie zuvor aufgebaut.

### Beschreibung der Amplituden-Phasen-Frequenz-Differenzenmodulation (APFDM)

Im Gegensatz zum bisherigen Stand der Technik, bei dem man zwischen PM und FM keine richtigen Unterschied macht, liefern die vorgestellten baugleichen Empfänger unterschiedliche Ausgangssignale für Phasen- und Frequenzmodulation.
Deshalb kann ein DM-Empfänger auch alle drei Informationen demodulieren.
Zur Auswertung eines derartigen Ausgangssignals muss man jedoch eine so genannte Taktrückgewinnungsschaltung implementieren. Diese Schaltung ist Standard bei aktuellen Funkübertragungsstrecken.
Vorteilhaft ist, dass die Informationsmenge bei gleicher Bandbreite nochmals merklich ansteigt.

### Beschreibung der 4-Moden-Differenzenmodulation (X4DM)

Alle zuvor beschriebenen Verfahren lassen sich direkt für eine Anwendung mit rechts- und linkszirkularen Freiraummode umsetzen.
Jedoch können alle vier Moden des Freiraums für die Übertragung verwendet werden. Dieses soll am Beispiel einer Phasenmodulation aller vier Freiraummoden verdeutlicht werden.

### Beispiel: P4DM

Empfangsseitig wird der bekannte Empfänger (z.B. Fig. 2) zweimalig aufgebaut und jeweils an einem linear- und einem zirkularpolarisierten Antennenpaar implementiert. Senderseitig kann man anstatt der Signalteiler 11 einen 1 auf 4 Signalteiler einsetzen. Durch zweifacher Nutzung der Phasenschieber 12 und 13 speist man nun linear- und zirkularpolarisierte Wellen mittels einer PDM. Führt man beispielsweise eine doppelte BPSK durch, so wird das in Fig. 2 dargestellte Ausgangssignal in beiden Kanälen durch die zweite Modulation auf minimal den halben oder maximal den anderthalbfachen Pegel gesenkt oder gehoben. Auf alle Fälle ist die Spannung immer noch deutlich über oder unter Null Volt.

Folglich kann auf diesem Weg auch bei gleicher Bandbreite die doppelte Informationsmenge übertragen werden. Jedoch wird auch in diesem Beispiel die Signalqualität und somit die Bitfehlerrate verschlechtert.

Verwendet man eine Kreuzdipolantenne mit 90°-Phasenschiebern, so kann man über diese eine Antenne alle vier Signale senden oder empfangen.

## Patentansprüche

1. Anordnung einer Funkübertragungsstrecke unter Nutzung von mindestens zwei Freiraummoden mittels zugehöriger Antennen, mit
einem sender, der einen Sendeoszillator (10) und Amplituden- und/oder Phasen- und/oder Frequenzmodulatoren (12, 13) aufweist, und
einem Empfängen, den mindestens zwei verschieden polarisierte Moden mittels mindestens zweier Antennen (16, 17) empfängt,
**dadurch gekennzeichnet, dass** der Empfängen einen Mischer (18, 32) zum Multiplizieren der verschieden polarisierten Moden miteinander aufweist.

2. Anordnung nach Anspruch 1, **dadurch gekennzeichnet,**
a. **dass** der Sender nur einen einzigen Sendeoszillator (10) bei einer festen mittleren Übertragungsfrequenz aufweist,
b. **dass** der Sender einen oder mehrere Amplitudenmodulatoren aufweist.

3. Anordnung nach Anspruch 1 oder 2, **dadurch gekennzeichnet,**
a. **dass** der Sender nur einen einzigen sendeoszillator (10) bei einer festen mittleren Übertrognugsfrequenz aufweist, und
b. **dass** der Sender zwei oder mehrere Phasenmodulatoren (12, 13) aufweist.

4. Anordnung nach einem der Ansprüche 1 bis 3, **dadurch gekennzeichnet, dass** der Sender zwei oder mehr Synthesizer aufweist, die an einem Quarzoszillator angebunden sind und deren Frequenz über Änderung der Frequenzteilerverhältnisse variiert werden kann.

## Claims

1. Arrangement for a radio link using at least two free space modes by means of associated antennas, said arrangement comprising a transmitter which includes a transmit oscillator (10) and amplitude modulators and/or phase modulators and/or frequency modulators (12, 13), and a receiver that receives at least two different-polarity modes by means of two antennas (16, 17), **characterized in that** said receiver (2) is provided with a merger (18, 32) to multiply the different-polarity modes with each another.

2. Arrangement according to Claim 1, **characterized in that** a. the transmitter comprises only one transmit oscillator (10) for a fixed average transmission frequency and that b. the transmitter has one amplitude modulator or several amplitude modulators.

3. Arrangement according to Claim 1 or 2, **characterized in that** the transmitter comprises only one transmit oscillator (10) for a fixed average transmission frequency and that b. the transmitter has two or more phase modulators (12, 13).

4. Arrangement according to any of the preceding Claim 1 to 3, **characterized in that** the transmitter is provided with two or more synthesizers which are linked to a crystal-controlled oscillator and the frequency of which is variable via a change of frequency divider ratios.

## Revendications

1. Dispositif pour parcours de transmission radio, utilisant au moins deux modes aériens au moyen d'antennes associées, avec un émetteur, qui présente un oscillateur émetteur (10) et des modulateurs d'amplitude et / ou de phase et / ou de fréquence (12, 13), et un récepteur, qui reçoit au moins deux modes de polarisation différents, au moyen d'au moins deux antennes (16, 17), **caractérisé en ce que** le récepteur présente un mélangeur (18, 32) pour multiplier entre eux les modes de polarisation différents.

2. Dispositif selon la revendication 1, **caractérisé en ce que** a. l'émetteur ne présente qu'un seul oscillateur d'émission (10) pour une fréquence de transmission moyenne, fixe, b. l'émetteur présente un ou plusieurs modulateurs d'amplitude.

3. Dispositif selon revendication 1 ou 2, **caractérisé en ce que** a. l'émetteur ne présente qu'un seul oscillateur d'émission (10) pour une fréquence de transmission moyenne, fixe, b. l'émetteur présente deux ou plusieurs modulateurs de phase (12, 13).

4. Dispositif selon l'une des revendications 1 à 3, **caractérisé en ce que** l'émetteur présente deux ou plusieurs synthétiseurs, qui sont liés à un oscillateur à quartz et dont la fréquence peut être variée par modification des rapports du démultiplicateur de fréquence.
